# EUROPEAN PATENT APPLICATION

(11) **EP 3 754 093 A1**
(43) Date of publication of application: **23.12.2020**
(21) Application number: 20176045.1
(22) Date of filing: 22.05.2020
(51) Int. Cl.: D06F 58/04, F04D 29/10, F16J 15/3224, D06F 37/20, D06F 25/00

(54) **FAN AND WASHING MACHINE HAVING SAME**

(30) Priority: 20.06.2019 CN 201920936656 U
(71) Applicant: BSH Hausgeräte GmbH, 81739 München (DE)
(72) Inventor: Wang, Yongjia, Nanjing, Jiangsu 210000 (CN); Xu, Yonggang, Nanjing, Jiangsu 210046 (CN)

(57) **Abstract**

The present utility model discloses a fan (10), including a housing (11). An impeller (13) is disposed inside the housing (11). A drive shaft (15) connected to the impeller (13) is connected to a motor (12) through a hole (14) formed on the housing (11). A diameter of the hole (14) is greater than a diameter of the drive shaft (15) to allow the drive shaft to eccentrically move. The housing is provided with a groove (17) surrounding the hole. The groove (17) is concentric with the hole (14). A diameter of the groove (17) is greater than the diameter of the hole (14). A sealing means (20) made of an elastic material is disposed inside the groove (17). The sealing means (20) is sleeved on the drive shaft (15) and includes an outer edge portion (21) having a large thickness and a wrinkle portion (22) having a small thickness and extending inward from the outer edge portion (21). A washing machine (100) equipped the fan (10) is also disclosed.

## Description

The present utility model relates to a washing machine and a fan structure thereof, and in particular, to a sealing structure of a fan.

Generally, washing machines having a clothes drying function include a fan disposed therein. The fan drives air to flow inside a drying drum to form a drying air flow, or drives cooling air to flow through a heat exchange apparatus.

The fan includes a housing, an impeller is disposed inside the housing, and the impeller is driven by a motor to rotate to driving the air to flow. The motor is located outside the housing, and a drive shaft is connected to the impeller inside the housing through a hole on the housing. A sealing means seals a spacing between the hole and the drive shaft.

During installation, the drive shaft cannot be ensured to be precisely concentric with the hole. In addition, when the motor rotates at a high speed, the drive shaft may eccentrically move relative to the hole, leading to the formation of a gap between the sealing means and the drive shaft, affecting the sealing effect.

An objective of the present utility model is to ensure the sealing effect of a sealing means of a fan when the drive shaft is eccentric.

To achieve the objective, the present utility model provides a fan, including a housing, where an impeller is disposed inside the housing, a drive shaft connected to the impeller is connected to a motor through a hole formed on the housing, a diameter of the hole is greater than a diameter of the drive shaft to allow the drive shaft to eccentrically move, the housing is provided with a groove surrounding the hole, the groove is concentric with the hole, a diameter of the groove is greater than the diameter of the hole, a sealing means made of an elastic material is disposed inside the groove, and the sealing means is sleeved on the drive shaft and includes an outer edge portion having a large thickness and a wrinkle portion having a small thickness and extending inward from the outer part, the wrinkle portion includes at least two bent walls including a first bent wall connected to the outer edge portion and a second bent wall extending inward from the first bent wall, and an edge of the second bent wall has a lip pressing against the drive shaft.

A width of the wrinkle portion may be set in such a manner that when the drive shaft eccentrically moves, the lip is always in contact with the drive shaft.

According to an optional improvement, the first bent wall and the second bent wall respectively tilt toward the drive shaft in opposite directions, and axial cross-sections of the first bent wall and the second bent wall form an acute angle.

The axial cross-sections of the first bent wall and the second bent wall form a V shape.

According to an optional improvement, the outer edge portion of the sealing means includes an elastic protrusion in a circumferential direction, and after the sealing means is disposed inside the groove of the housing, the elastic protrusion presses an inner wall of the groove.

The soft wrinkle portion of the sealing means can well contact with the drive shaft. The configuration of the two bent walls provides a large distance for free radial extension of the wrinkle portion. For a sealing means including only one bent wall, the bent wall needs to be designed wider in order that the drive shaft can fully contact with the drive shaft during eccentric movement, and the angle between the bent wall and the drive shaft during contact is smaller. Because the drive shaft rotates at a high speed and produces severe friction against the sealing means during running of the motor, the bent wall may be torn by the friction or may rapidly fail due to ageing if the angle between the bent wall and the drive shaft during contact is small and the area of the contact part is large. The use of two bent walls may solve the above problem that occurs in the case of using of one single bent wall. The wrinkle portion has higher ductility, and can ensure a good contact with the drive shaft when the drive shaft is eccentric, thereby ensuring the sealing effect. In addition, the wrinkle portion produces low friction with the sealing means, thereby achieving a longer service life and higher performance.

The present utility model further provides a washing machine, equipped with a fan according to the foregoing implementations or any combination of the implementations.

The following describes specific implementations of the present utility model with reference to the accompanying drawings.
FIG. 1 is a simple schematic diagram showing important constituents of a clothes dryer;
FIG. 2 is a partial cross-sectional view of a fan;
FIG. 3 is an enlarged view of part A in FIG. 2; and
FIG. 4 is a schematic a cross-sectional view of a drive shaft and a sealing means when the drive shaft is eccentric.

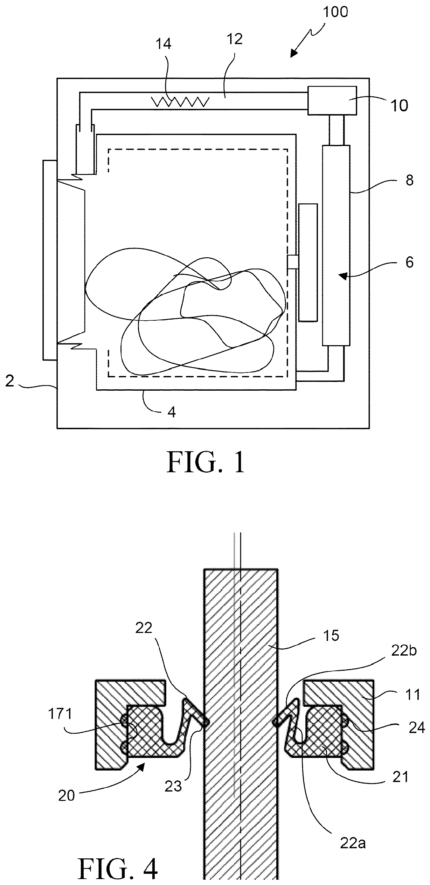

As shown in FIG. 1, a washing machine 10 includes a cabinet 2. A drying chamber 4 configured to dry clothes is located in the cabinet 2. A head end and a tail end of a drying air channel 6 are connected to the drying chamber 4. A heat exchange apparatus 8, a fan 10, and an air heating channel 12 are provided in sequence on the drying air channel 6 along an air flow direction. The air heating channel is provided therein with a heating apparatus 14 configured to heat air flowing therethrough. The heat exchange apparatus 8 exchanges heat with humid and hot drying air flowing therethrough, to reduce the temperature of the drying air, so that moisture carried by the drying air condenses into liquid water. The function of the fan 10 in the drying air channel 6 is to cause air to flow in the drying chamber 4 and the drying air channel 6.

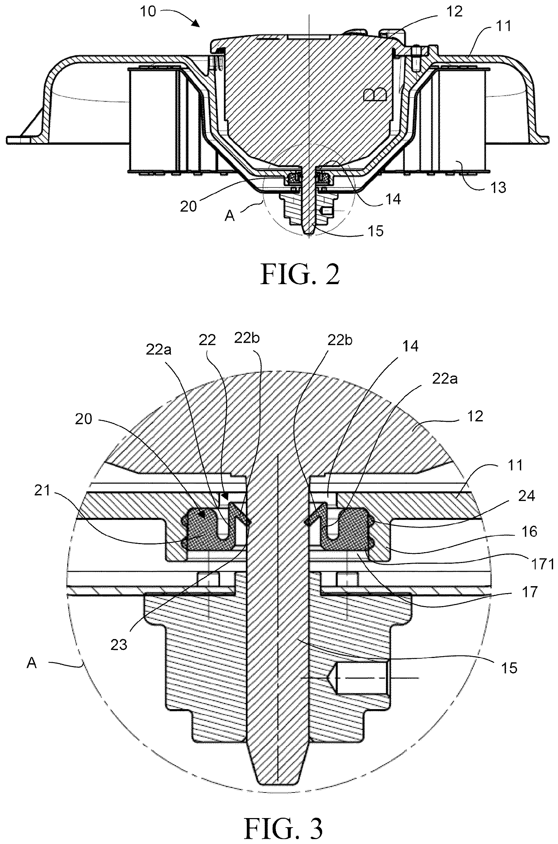

As shown in FIG. 2, the fan 10 includes a housing 11 and an impeller 13 located inside the housing 11 and driven by a motor 12. The motor 12 is located outside the housing. The housing 11 is provided with a hole 14. A drive shaft 15 is in transmission connection to the motor 12 and the impeller 13 through the hole 14. A diameter of the hole 14 is greater than a diameter of the drive shaft 15, to allow the drive shaft 15 to eccentrically move. A sealing means 20 seals a spacing between the drive shaft 15 and the hole 14.

As shown in FIG. 3, the housing 11 is provided with an annular protrusion 16 surrounding the hole 14, so that a groove 17 having an inner diameter greater than the diameter of the hole 14 is formed inside the protrusion 16. The groove 17 is concentric with the hole 14. A sealing means 20 made of an elastic material such as rubber having good flexibility, is disposed inside the groove 17, and sleeved on the drive shaft 15.

The sealing means 20 includes an outer edge portion 21 having a large thickness and a wrinkle portion 22 having a small thickness and extending inward from the outer edge portion 21. The wrinkle portion 22 includes a first bent wall 22a connected to the outer edge portion 21 and a second bent wall 22b extending inward from the first bent wall 22a. An edge of the second bent wall 22b has a lip 23 pressing against the drive shaft 15. The first bent wall 22a and the second bent wall 22b respectively tilt toward the drive shaft 15 in opposite directions, and axial cross-sections of the first bent wall 22a and the second bent wall 22b form an acute angle. As can be seen from FIG. 3 or FIG. 4, the axial cross-sections of the first bent wall 22a and the second bent wall 22b form a "V" shape. In this way, when the drive shaft 15 eccentrically moves, as shown in FIG. 4, the first bent wall 22a and the second bent wall 22b both deform to change their radial angles along with the movement of drive shaft 15, and have good extensibility, which ensures a close contact with the drive shaft 15, thereby ensuring the sealing effect.

In order that the lip 23 is always in contact with the drive shaft 15 to ensure the sealing effect when the drive shaft 15 eccentrically moves, the width of the wrinkle portion 22 needs to be adaptively set.

To achieve a tighter engagement of the sealing means 20 with the groove 17, an outer edge portion 21 of the sealing means 20 has an elastic protrusion 24 in a circumferential direction. The elastic protrusion 24 may be in the form of multiple points, or a protruding rib. After the sealing means 20 is disposed inside the groove 17, the elastic protrusion 24 presses an inner wall 171 of the groove 17.

The specific implementations described above and shown in the accompanying drawings are only used for illustrating the present utility model, and are not all implementations of the present utility model. Any modification made to the present utility model by a person of ordinary skill in the art without departing from the scope of the basic technical idea of the present utility model shall fall within the protection scope of the present utility model.

## Claims

1. A fan, having a housing (11), wherein an impeller (13) is disposed inside the housing, a drive shaft (15) connected to impeller is connected to a motor (12) through a hole (14) formed on the housing, a diameter of the hole is greater than a diameter of the drive shaft to allow the drive shaft to eccentrically move, the housing is provided with a groove (17) surrounding the hole, the groove is concentric with the hole, a diameter of the groove is greater than the diameter of the hole, and a sealing means (20) made of an elastic material is disposed inside the groove, **characterized in that**: the sealing means is sleeved on the drive shaft and comprises an outer edge portion (21) having a large thickness and a wrinkle portion (22) having a small thickness and extending inward from the outer part, the wrinkle portion comprises at least two bent walls comprising a first bent wall (22a) connected to the outer edge portion and a second bent wall (22b) extending inward from the first bent wall, and an edge of the second bent wall has a lip (23) pressing against the drive shaft.

2. The fan according to claim 1, **characterized in that**: when a width of the wrinkle portion is set in such a manner that when the drive shaft eccentrically moves, the lip is always in contact with the drive shaft.

3. The fan according to claim 1, **characterized in that**: the first bent wall and the second bent wall respectively tilt toward the drive shaft in opposite directions, and axial cross-sections of the first bent wall and the second bent wall form an acute angle.

4. The fan according to claim 1, **characterized in that**: the axial cross-sections of the first bent wall and the second bent wall form a V shape.

5. The fan according to claim 1, **characterized in that**: the outer edge portion of the sealing apparatus comprises an elastic protrusion (24) in a circumferential direction, and after the sealing means is disposed inside the groove of the housing, the elastic protrusion presses an inner wall (171) of the groove.

6. A front-loaded washing machine, **characterized by** being equipped with a fan (10) according to any one of claims 1 to 5.
